# EUROPÄISCHE PATENTSCHRIFT

(11) **EP 2 848 389 B1**
(45) Veröffentlichungstag und Bekanntmachung des Hinweises auf die Patenterteilung: **25.05.2016**
(21) Anmeldenummer: 13184137.1
(22) Anmeldetag: 12.09.2013
(51) Int. Cl.: B29C 51/32, B29C 51/14, B29C 51/20, B29C 51/22, B29C 51/26, B29C 51/42, B29L 9/00

(54) **Formungsvorrichtung und Thermoformverfahren**
Shaping apparatus and thermoforming method
Dispositif de formage et procédé de thermoformage

(43) Veröffentlichungstag der Anmeldung: 18.03.2015
(73) Patentinhaber: FRIMO Group GmbH, 49504 Lotte (DE)
(72) Erfinder: Waldherr, Otto, 83317 Teisendorf (DE); Rajsp, Peter, 5020 Salzburg (AT)
(74) Vertreter: Hoffmann Eitle

(56) Entgegenhaltungen:
- EP-A2- 2 241 508
- DE-U1- 20 312 501
- US-A- 5 759 591
- US-A1- 2007 252 307

## Beschreibung

### Technisches Gebiet

Die vorliegende Erfindung betrifft eine Vorrichtung zur Durchführung eines Formungsprozesses und ein Verfahren, bei dem Werkstücke einem Formungsprozess, bevorzugt einem Thermoformprozess unterworfen werden. Dabei bezieht sich der Begriff Formprozess insbesondere auf das Umformen thermoplastischer Kunststoffe, sowie auf das Kaschieren von Trägermaterialien mit geeigneten Obermaterialien.

### Stand der Technik

Formprozesse, bei denen thermoplastische Materialien zunächst erwärmt werden, um dann einem Formungsprozess unterzogen zu werden, finden gerade im industriellen Bereich vermehrt Anwendung. Als Alternative zum Spritzguss zeichnet sich das Thermoformverfahren durch günstige Werkstoff- und Werkzeugkosten aus und ist besonders bei kleinen und mittleren Serien besonders wirtschaftlich. Gerade im Automobilbau finden Thermoformprozesse etwa bei der Herstellung von Verkleidungsteilen oder Karosserieelementen verstärkt Anwendung.

Unter anderem fällt unter diesen Oberbegriff auch das Kaschieren von Trägermaterialien durch schützende oder dekorative Schichten (Obermaterial). Unter Kaschieren versteht man dabei das Verbinden mehrerer Lagen gleicher oder verschiedener Materialien (meist Folien) zum Teil mit Hilfe geeigneter Kaschiermittel, wie Lacke oder Haftmittel. Der Ausdruck 'Werkstück' kann sich im Folgenden auf ein einzelnes thermoplastisches Werkstück oder auf einen Komplex aus Trägermaterial und Obermaterial beziehen.

Sowohl bei Thermoformprozessen als auch bei Kaschierprozessen sind dabei zwei wesentliche Bearbeitungsschritte durch eine entsprechende Formungsvorrichtung nötig. Zunächst muss das Werkstück durch Zustellen (Zusammenfahren) entsprechender Formwerkzeuge ausgeformt werden. In einem Kaschierprozess wird dabei auch das Trägermaterial mit dem Obermaterial verbunden. Weiterhin muss das ausgeformte Werkstück danach im Allgemeinen durch Zusammenfahren geeigneter Zuschneide-Werkzeuge in die gewünschte Form geschnitten werden, um Überstände und dergleichen zu entfernen.

Dementsprechend muss zur Bearbeitung eines thermoplastischen Werkstücks zunächst ein Formwerkzeug in einem Obertisch der Formungsvorrichtung aufgenommen werden, der mit einem entsprechenden Werkzeug auf einem Untertisch derart zusammenwirkt, dass das Werkstück umgeformt und somit in die gewünschte Form gebracht wird. Um danach den Zuschneidevorgang am umgeformten Werkstück auszuführen, muss das Formwerkzeug anschließend abgelegt werden. Erst dann kann ein geeignetes Zuschneidewerkzeug (z. B. ein Stanzwerkzeug) im Obertisch aufgenommen werden. Nach dem Zuschneidevorgang wird das wiederrum Zuschneidewerkzeug abgelegt, um erneut das Formwerkzeug aufnehmen zu können. Dieser Werkzeugwechsel zwischen dem Formwerkzeug und dem Zuschneidewerkzeug ist vergleichsweise zeitaufwendig und beschränkt die erreichbare Taktung erheblich.

Um eine schnellere Taktung zu erzielen, können bekannte Formungsvorrichtungen deshalb über zwei Obertische verfügen. Entsprechend ist in einem Obertisch das Formwerkzeug fest aufgenommen, während in dem anderen Obertisch das Zuschneidewerkzeug fest aufgenommen ist. Bei der Bearbeitung des Werkstücks wird zunächst das Formwerkzeug des einen Obertisches mit dem Werkstück in Kontakt gebracht. Danach werden beide Obertische relativ zum Werkstück verfahren, damit das Zuschneidewerkzeug des anderen Obertisches bezüglich des Werkstücks zugestellt werden kann. Damit kann der zeitintensive vollständige Wechsel des Werkzeugs vermieden werden.

Derartige Vorrichtungen mit zwei Obertischen weisen allerdings den Nachteil auf, dass sämtliche Einrichtungen zum Betrieb der Obertische, wie etwa Vorschubmechanismen, oder die notwendige Sensorik jeweils doppelt bereitgestellt werden müssen. Dies erhöht nicht nur die Komplexität der Maschine, sondern auch Anschaffungs- und Instandhaltungskosten. Sollen darüber hinaus noch weitere Arbeitsvorgänge an dem Werkstück durchgeführt werden (z.B. wie etwa weitere Prägevorgänge) sind gegebenenfalls noch weitere Obertische zum Betrieb der Vorrichtung erforderlich.

Die US 5,759,591 betrifft ein Thermoformverfahren und eine Thermoformvorrichtung, bei dem auf einem Untertisch aufgenommene Unterwerkzeuge wechselweise mit einem in einem Obertisch aufgenommenen Oberwerkzeug zusammenwirken. Zusätzlich ist ein weiteres, separates Bearbeitungswerkzeug vorgesehen, das einen weiteren Bearbeitungsvorgang an dem Werkstück ausführen kann.

Die DE 203 12 501 U1 ist auf ein Thermoformverfahren und eine Thermoformvorrichtung gerichtet, welche aufweist: einen Obertisch, ein Formwerkzeug, das in dem Obertisch angeordnet ist, einen Untertisch mit einem Formwerkzeug und einem Zwischenwerkzeug, das zur Bearbeitung zweier Werkstückhälften sowohl mit dem Oberwerkzeug als auch mit dem Unterwerkzeug gleichzeitig wechselwirken kann. Das zugehörige Verfahren sieht das gleichzeitige Bearbeiten zweier Werkstückhälften durch Zusammenfahren von Ober- und Untertisch vor. Das Zusammenfügen der Werkstückhälften geschieht nach Entfernen des Zwischenwerkzeugs durch Zusammenwirken der in den Ober- und Untertischen aufgenommenen Formwerkzeugen.

Die EP 2 241 508 A2 ist auf eine Arbeitsstation einer Blisterverpackungsmaschine gerichtet, bei der die Konstruktion der Arbeitsstation zur einfachen Auswechslung der Werkzeugeinheiten so gestaltet ist, dass die Trägersäulen zwischen den oberen und unteren Holmen der Rahmenkonstruktion der Arbeitsstation weiter voneinander distanziert sind als die Längsausdehnung der Werkzeugeinheit.

Schließlich ist die US 2007/0252307 A1 auf eine Thermoformvorrichtung und ein entsprechendes Verfahren gerichtet, bei dem eine erhitzte Schicht oder Folie in einen zweiteiligen Formaufbau eingebracht und tiefgezogen wird. Anschließend wird der Überstand durch ein Stanzwerkzeug entfernt.

### Darstellung der Erfindung

Es ist daher Aufgabe der vorliegenden Erfindung, eine Formungsvorrichtung und ein Thermoformverfahren bereitzustellen, die eine Verringerung der Komplexität bestehender Formungsvorrichtungen bei gleichzeitig hoher Flexibilität und Taktung ermöglichen.

Erfindungsgemäß wird diese Aufgabe durch eine Formungsvorrichtung und ein Formverfahren mit den Merkmalen der unabhängigen Patentansprüche gelöst. In den Unteransprüchen finden sich vorteilhafte Ausgestaltungen und Weiterbildungen der Erfindung.

Demgemäß umfasst eine Formungsvorrichtung zur Bearbeitung eines Werkstücks einen Untertisch mit mindestens einem Unterwerkzeug, mindestens einem Obertisch, und mindestens ein Oberwerkzeug, dass in dem mindestens einen Obertisch als ein erstes Oberwerkzeug aufgenommen werden kann, wobei der mindestens eine Obertisch und/oder der Untertisch relativ zueinander verfahrbar sind und zur Bearbeitung des mindestens eine Werkstücks derart zusammengefahren werden können, dass ein Bearbeitungsvorgang an dem mindestens einen Werkstück durchgeführt werden kann, bei dem das mindestens eine Werkstück mit dem Unterwerkzeug und dem ersten Oberwerkzeug in Kontakt kommt, und der mindestens eine Obertisch geeignet ist, zusätzlich zu einem ersten Oberwerkzeug ein zweites Oberwerkzeug derart lösbar aufzunehmen, dass die beiden in dem Obertisch aufgenommenen Werkzeuge in der Zusammenfahrrichtung hintereinander angeordnet sind, Dabei sind der mindestens eine Obertisch und die ersten und zweiten Oberwerkzeuge derart eingerichtet, dass bei aufgenommenem zweiten Oberwerkzeug ein Bearbeitungsvorgang an dem mindestens einen Werkstück durchgeführt werden kann, bei welchem das mindestens eine Werkstück mit dem Unterwerkzeug und dem zweiten Oberwerkzeug in Kontakt kommt. Dabei ist das erste Oberwerkzeug oder das zweite Oberwerkzeug ein Formwerkzeug zum Ausformen des mindestens einen Werkstücks und das Andere ein geeignetes Werkzeug zum Zurechtschneiden des mindestens einen Werkstücks, insbesondere ein Stanzwerkzeug. Zur Aufnahme der verschiedenen Oberwerkzeuge weisen der Obertisch oder die Obertische ferner jeweils eine Verbindungseinrichtung für das erste Oberwerkzeug und das zweite Oberwerkzeug auf, die bei Aufnahme des jeweiligen Oberwerkzeugs mit einer entsprechenden Verriegelung des jeweiligen Oberwerkzeugs in Eingriff kommen.

Hierbei beinhaltet der Ausdruck "dass ein Bearbeitungsvorgang durchgeführt werden kann", dass die Voraussetzungen für einen entsprechenden Bearbeitungsvorgang geschaffen sind. Dies kann bedeuten, dass eine geeignete Kraftübertragung (z.B. zum Umformen oder Ausstanzen) von den Werkzeugtischen auf die Werkzeuge gewährleistet werden kann. Ferner kann dies bedeuten, dass beiden Oberwerkzeugen auch die gegebenenfalls nötigen Prozessmittel (z.B. (Wärme-)Energie oder Prozessfluide) bereitgestellt werden können. Dadurch kann das Werkstück unter Aufbietung einer geeigneten Kraft und vorbestimmten Rahmenbedingungen, wie etwa einer notwendigen Temperatur, bearbeitet werden.

Der Ausdruck "in Zusammenfahrrichtung hintereinander" bedeutet hierbei, dass bei aufgenommenem ersten Oberwerkszeug und aufgenommenen zweiten Oberwerkzeug das zweite Oberwerkzeug hinter dem ersten Oberwerkzeug und näher zur Seite des Werkstücks aufgenommen ist Entsprechend kann mit dem zweiten Oberwerkzeug ein Bearbeitungsvorgang an dem Werkstück durchgeführt werden, ohne das erste Oberwerkzeug abzulegen. Gegenüber bisherigen Verfahren mit einem Obertisch, bei dem die verschiedenen Oberwerkzeuge alternierend aufgenommen und abgelegt werden mussten, hat dies den Vorteil, dass die Taktung signifikant erhöht werden kann. Gegenüber Vorrichtungen, bei denen die verschiedenen Bearbeitungsschritte durch jeweils einzelne Obertische ausgeführt werden, weist die vorliegende Erfindung den Vorteil auf, dass gegenüber einem Maschinenkonzept mit zwei Obertischen ein Obertisch eingespart werden kann. Da die vorliegende Erfindung ausdrücklich nicht auf einen Obertisch begrenzt ist, können gegenüber bisherigen Maschinenkonzepten mit vier Obertischen zumindest zwei Obertische eingespart werden, usw. Ferner hat die vorliegende Erfindung den Vorteil, dass die Formungsvorrichtung wie bisher mit verschiedenen Anordnungen der Untertische bzw. Unterwerkzeugen kombiniert werden kann. Dabei können die Untertische spezielle Zubringmechanismen, wie etwa Dreh-, Schiebe- oder Schwenktische aufweisen.

Das Zusammenfahren von Obertisch und Untertisch kann dabei in vertikaler Richtung erfolgen, und das erste Oberwerkzeug und das zweite Oberwerkzeug sind somit in dem Obertisch oder den Obertischen übereinander aufgenommen.

Dabei kann die Kraftübertragung vom Obertisch auf das jeweilige Oberwerkzeug jeweils direkt über die Verbindungseinrichtungen bzw. die entsprechenden Verriegelungen erfolgen, so dass die Kraft von dem ersten Obertisch jeweils direkt auf das erste Oberwerkzeug und das zweite Oberwerkzeug übertragen wird. Alternativ bzw. zusätzlich kann die Kraftübertragung vom Obertisch auf das zweite Oberwerkzeug auch indirekt über das erste Oberwerkzeug erfolgen.

Ferner können die Oberwerkzeuge jeweils eine Zentriereinrichtung aufweisen, um das jeweilige Oberwerkzeug beim Zusammenfahren von Obertisch und Untertisch sowie des Unterwerkzeugs zu zentrieren.

Dies begünstigt nicht nur den modularen Aufbau des Systems und eine gleichbleibende Qualität des bearbeiteten Werkstücks, sondern bietet zusätzlich die Möglichkeit, dass die Kraftübertragung vom Obertisch über das erste Oberwerkzeug auf das zweite Oberwerkzeug durch eben diese Zentriereinrichtungen bewerkstelligt werden kann. Dadurch kann die Anzahl der benötigten Bauteile nochmals reduziert werden.

Gemäß einer bevorzugten Ausführungsform weisen der Obertisch oder die Obertische ferner jeweils mindestens einen Anschluss für das erste Oberwerkzeug und mindestens einen Anschluss für das zweite Oberwerkzeug auf, wobei die Anschlüsse derart eingerichtet sind, dass sie das jeweilige Oberwerkzeug mit Energie und/oder Prozessfluid versorgen.

Dies gewährleistet eine zuverlässige Versorgung der jeweiligen Oberwerkzeuge mit Prozessmedien, die z.B. für einen Thermoformprozess notwendig sind. Diese Prozessmedien können z. B. Prozesswasser zum Erwärmen bzw. Kühlen, Druckluft bzw. Vakuum (oder allg. Pneumatik) zum Ansaugen bzw. Ausgeben des Werkstücks oder Elektrizität umfassen. Die Verwendung dieser Anschlüsse ermöglicht, dass die Oberwerkzeuge schnell gewechselt bzw. aufgenommen werden können. Dabei sind die Anschlüsse bevorzugt universell, sodass verschiedenartigste Oberwerkzeuge problemlos in dem Obertisch oder den Obertischen aufgenommen werden können.

Bevorzugt verfügt die Vorrichtung ferner über eine Ablage für nicht in dem mindestens einen Obertisch aufgenommene Werkzeuge.

Durch die Bereitstellung einer Ablage für nicht verwendete Oberwerkzeuge kann die Flexibilität innerhalb der Maschine weiter erhöht werden. Somit kann eine Mehrzahl unterschiedlicher Werkzeuge in der Maschine bereitgestellt werden, und ein Wechsel der Werkzeuge ist möglich, ohne den Produktionsprozess zu unterbrechen.

Dabei können die Oberwerkzeuge insbesondere Formwerkzeuge, Stanzwerkzeuge, Prägewerkzeuge, Querbeschneidewerkzeuge und Beschnitt- oder Laserbeschnittwerkzeuge sein.

Gemäß einer bevorzugten Ausführungsform sind die Oberwerkzeuge und Unterwerkzeuge temperierbar und die Vorrichtung verfügt ferner über eine Erwärmungseinrichtung zum Erwärmen des mindestens einen Werkstücks.

Die Temperierung der Ober- und Unterwerkzeuge sowie die Erwärmungseinrichtung begünstigt dabei die Verarbeitung thermoplastischer Werkstücke in einem Thermoformprozess. Dabei kann das mindestens eine Werkstück in einer bevorzugten Ausführungsform aus einem Trägermaterial bestehen, auf das durch das Zusammenfahren des Formwerkzeugs und des Unterwerkzeugs ein dazwischen eingelegtes Obermaterial aufzubringen ist.

Diese bevorzugte Ausführungsform erschließt somit den eingangs erwähnten Kaschierprozess, bei dem mehrere Lagen gleicher oder verschiedener Materialien verbunden werden. Dies kann ohne Kleber oder auch mit Hilfe geeigneter Klebstoffe (z. B. Lack, Leim oder Wachs) erfolgen. Als Obermaterial können dabei alle Arten von thermoplastischen Kunststoffen wie z. B. PVC, TPO, ASA oder ABS Verwendung finden. Auch textile Materialien sowie Schaumverbunde zur Verbesserung der Haptik können eingesetzt werden. Das Obermaterial kann dabei als Dünnfilm von einer Rolle fortlaufend zugeführt werden. Als Trägermaterial können z. B. Kunststoffe, Verbundmaterialien oder Holzfaserverbundwerkstoffe verwendet werden.

Gemäß einer weiteren bevorzugten Ausführungsform kann das zumindest eine Werkstück eine thermoplastische Folie oder Platte sein, die durch Zusammenfahren des Formwerkzeugs und des Unterwerkzeugs ausgeformt wird.

Diese bevorzugte Ausführungsform bezieht sich somit auf den eingangs erwähnten Thermoformprozess. Für das Folien- bzw. Plattenmaterial finden bevorzugt thermoplastische Kunststoffe, wie etwa TPO, ASA, ABS oder PVC, Verwendung.

Gemäß einer bevorzugten Ausführungsform verfügt die Vorrichtung ferner über eine Positionierungseinrichtung zum Positionieren des zwischen den Oberwerkzeugen und dem Unterwerkzeug eingelegten mindestens einen Werkstücks oder Teile des mindestens einen Werkstücks.

Durch die Bereitstellung einer Positionierungseinrichtung kann die Prozesszeit weiter verringert werden und die Qualität des Erzeugnisses wird weiter verbessert. Insbesondere können vor allem thermoplastische Folien bzw. Obermaterialien fortlaufend von einer Rolle zugeführt werden. Die Positionierungseinrichtung kann dabei einen Rahmen umfassen, welcher die Folie bzw. das Obermaterial geeignet aufspannt.

Das entsprechende Thermoformverfahren unter Verwendung einer Thermoformvorrichtung nach Anspruch 1.

Dabei wird das zweite Oberwerkzeug in dem Obertisch in der Zusammenfahrrichtung bevorzugt hinter dem ersten Oberwerkzeug aufgenommen, d.h. beim Zustellen der Ober- und Untertische kommt das zweite Oberwerkzeug mit dem Werkstück in Kontakt. Dadurch, dass das zweite Oberwerkzeug zusätzlich zum ersten Oberwerkzeug gewissermaßen "Huckepack" im Obertisch aufgenommen ist, können zwei unterschiedliche Bearbeitungsprozesse (in diesem Fall: Ausformen und Zurechtschneiden) mit einem Obertisch ausgeführt werden. Gleichzeitig können vergleichsweise hohe Taktraten erreicht werden.

Voranstehend wurde das Formwerkzeug als erstes Oberwerkzeug und das Stanzwerkzeug als zweites Oberwerkzeug aufgenommen. Dies kann allerdings auch umgekehrter Reihenfolge erfolgen und das erste Oberwerkzeug kann das Stanzwerkzeug sein, während das zweite Oberwerkzeug als Formwerkzeug ausgebildet ist.

Dabei kann das Werkstück eine Folie oder Platte sein. Wie oben beschrieben, sind als Materialien hierfür thermoplastische Kunststoffe besonders geeignet.

Besteht das Werkstück gemäß einer bevorzugten Ausführungsform aus einem Trägermaterial, auf das ein Obermaterial aufzubringen ist, umfasst das Formverfahren ferner bevorzugt die Schritte: Anordnen und Positionieren des Obermaterials und des Trägermaterials zwischen einem in einem Obertisch aufgenommenem Formwerkzeug und einem Unterwerkzeug auf einem Untertisch; und Zusammenfahren des Obertisches und des Untertisches, sodass das Formwerkzeug und das Unterwerkzeug mit dem Werkstück in Kontakt kommt, um das Obermaterial oder das Trägermaterial durch Zusammenpressen und Verformen miteinander zu verbinden.

Zusätzlich können zum besseren Verbinden des Obermaterials mit dem Trägermaterial noch geeignete Klebstoffe zugeführt werden. Ferner ist das Verfahren gemäß der bevorzugten Ausführungsform nicht auf ein Obermaterial beschränkt und es können auch mehrere Obermaterialien oder mehrere Obermaterialschichten aufgebracht werden.

Ferner kann das Formverfahren die folgenden Schritte umfassen: Temperieren des Formwerkzeugs; und Erwärmen des mindestens einen Werkstücks.

### Kurzbeschreibung der Zeichnungen

Die Erfindung wird im Folgenden anhand von Ausführungsbeispielen unter Bezugnahme auf die beiliegenden Figuren näher erläutert.

Dabei zeigen:
- Fig. 1: eine Gesamtansicht einer Vorrichtung zur Bearbeitung eines Werkstücks gemäß einer bevorzugten Ausführungsform, welche einen Obertisch, einen Untertisch mit Unterwerkzeug, sowie mehrere Oberwerkzeuge umfasst;
- Fig. 2: eine Detailansicht eines Obertisches mit zwei aufgenommenen Oberwerkzeugen gemäß der bevorzugten Ausführungsform;

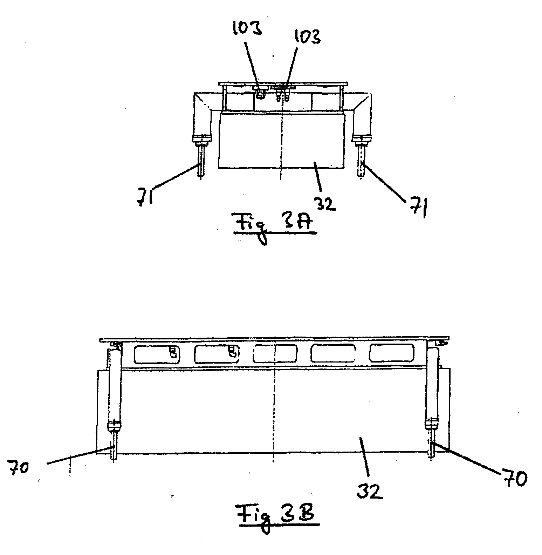

- Fig. 3A und 3B: Seitenansichten des ersten Oberwerkzeugs gemäß der bevorzugten Ausführungsform der vorliegenden Erfindung;

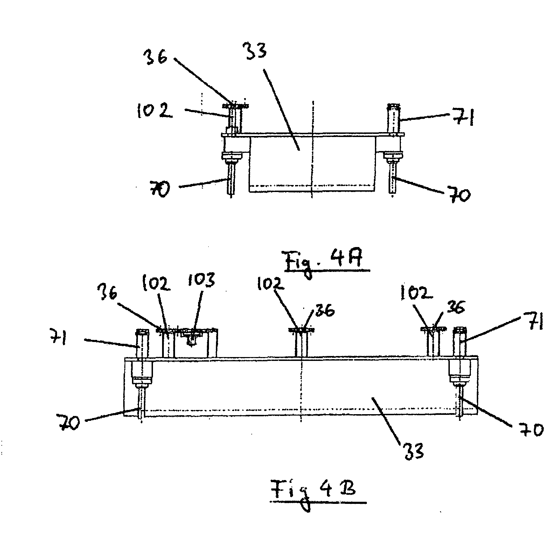

- Fig. 4A und 4B: Seitenansichten des zweiten Oberwerkzeugs gemäß der bevorzugten Ausführungsform der vorliegenden Erfindung;
- Fig. 5: eine Gesamtansicht einer weiteren bevorzugten Ausführungsform der vorliegenden Erfindung, welche zwei Obertische mit entsprechenden Oberwerkzeugen umfasst; und
- Fig. 6A bis 6D: einen exemplarischen Ablauf eines Bearbeitungsvorgangs mit der Vorrichtung gemäß der bevorzugten Ausführungsform.

Soweit nichts Gegenteiliges angegeben ist, bezeichnen in den Figuren dieselben Bezugszeichen gleiche oder funktionsgleiche Komponenten.

### Ausführliche Beschreibung der bevorzugten Ausführungsformen

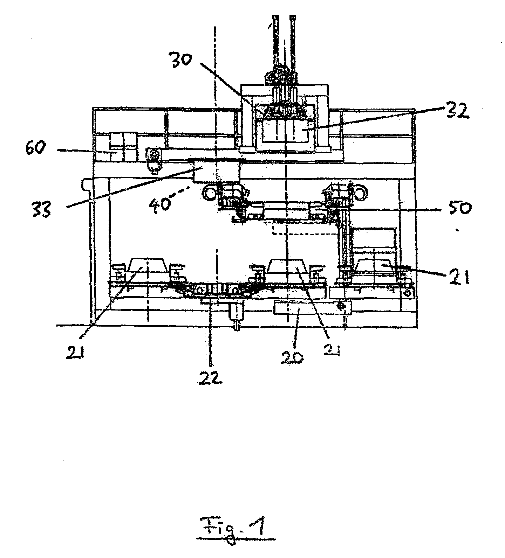

In Fig. 1 ist eine Formungsvorrichtung zur Bearbeitung eines Werkstücks gemäß einer bevorzugten Ausführungsform der vorliegenden Erfindung in einer Gesamtansicht gezeigt. Weitere in diesem Zusammenhang genannte Modifikationen können jeweils miteinander kombiniert werden, um neue Ausführungsformen auszubilden.

Komponenten der Formungsvorrichtung umfassen: einen Obertisch 30, mehrere Oberwerkzeuge 32, 33, einen Untertisch 20, Unterwerkzeuge 21, einen die Unterwerkzeuge 21 aufnehmender Drehtisch 22, Ablagen 40 für Oberwerkzeuge 32, 33, sowie eine Positionierungseinrichtung 50.

Der Obertisch 30 ist bezüglich des Untertisches 20 sowohl horizontal als auch vertikal verschiebbar. Dadurch kann der Obertisch 30 sowohl über dem Untertisch 20 positioniert werden, als auch über die Ablagen 40 bewegt werden, um dort Oberwerkzeuge 32, 33 aufzunehmen bzw. abzulegen. Zur Bearbeitung eines oder mehrerer Werkstücke 1, die zwischen dem Oberwerkzeug 33, 32 und dem Unterwerkzeug 21 eingelegt sind, wird der Obertisch vertikal verfahren, sodass das Werkstück 1 sowohl mit dem entsprechenden Oberwerkzeug 32, 33 als auch mit dem entsprechenden Unterwerkzeug 21 in Kontakt kommt.

In dieser Ausführungsform sind die Unterwerkzeuge 21 auf einem Drehteller 22 als Zubringvorrichtung eingerichtet. Der Drehteller 22 führt die Unterwerkzeuge 21 dabei dem Untertisch 20 zu, um das Werkstück 1 anschließend durch Zustellen der Ober- und Untertische zu bearbeiten. Alternativ können auch andere Zubringvorrichtungen, wie etwa Schiebetische oder Schwenktische Verwendung finden, oder das Unterwerkzeug 21 kann direkt auf dem Untertisch 20 eingerichtet sein.

Das Werkstück 1 oder die mehreren Werkstücke 1 werden zur Bearbeitung mittels der Positionierungseinrichtung 50 zwischen den Oberwerkzeugen 32, 33 und dem Unterwerkzeug 21 positioniert.

Die Bearbeitung des Werkstücks kann dabei verschiedenartig gestaltet sein. So kann das Werkstück etwa einem Umformprozess unterzogen werden, bei dem das Oberwerkzeug 32, 33 und das Unterwerkzeug 21 derart zusammenwirken, dass das Werkstück in eine gewünschte Form gebracht wird. Das entsprechende Oberwerkzeug wird als Formwerkzeug bezeichnet. Die Formwerkzeuge können dabei IMG-Formwerkzeuge sein bzw. zusätzliche Formhilfen umfassen.

Speziell beim Thermoformverfahren findet ferner eine Erwärmung des Werkstücks statt, und die Oberwerkzeuge 32, 33 und Unterwerkzeuge 21 werden entsprechend temperiert. Die Erwärmung des mindestens einen Werkstücks geschieht dabei durch eine Erwärmungseinrichtung 60. Die Temperierung der Ober- bzw. Unterwerkzeuge erfolgt durch Zuführung geeigneter Prozessmittel, wie etwa einem Prozessfluid.

Weitere Arbeitsvorgänge an dem mindestens einen Werkstück können ein Zurechtschneiden bzw. Ausstanzen des mindestens einen Werkstücks 1 vorsehen. Dafür geeignete Oberwerkzeuge sind z.B. als Stanzwerkzeuge, Beschnittwerkzeuge, Laserbeschnittwerkzeuge oder Querbeschneidewerkzeuge ausgebildet.

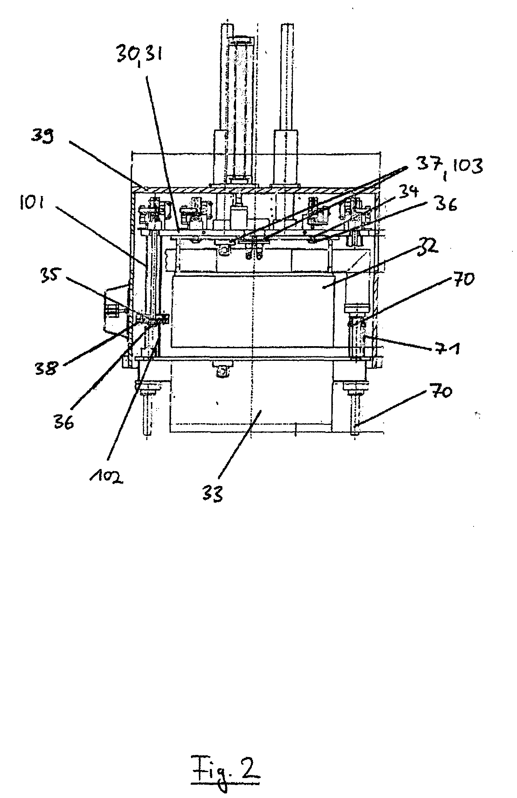

Wie in Fig. 2 im Detail gezeigt, zeichnet sich der Obertisch 30, 31 gemäß der bevorzugten Ausführungsform der vorliegenden Erfindung dadurch aus, dass er zwei Oberwerkzeuge 32, 33 übereinander aufnehmen kann. Beispielhaft ist in Fig. 2 das erste Oberwerkzeug 32 als Formwerkzeug ausgebildet, während das zweite Oberwerkzeug 33 als Stanzwerkzeug ausgebildet ist. Die Anordnung und Ausgestaltung der Oberwerkzeuge 32, 33 im Obertisch 30 ist allerdings nicht hierauf beschränkt.

Sowohl der Obertisch 30, als auch das erste Oberwerkzeug 32 und das zweite Oberwerkzeug 33 sind hierbei derart angepasst, dass mit beiden Oberwerkzeugen (also auch falls das zweite Oberwerkzeug 33 unter dem ersten Oberwerkzeug 32 im Obertisch 30 aufgenommen ist) ein Bearbeitungsvorgang am Werkstück durchgeführt werden kann. Gemäß den vorherigen Ausführungen ist es dazu gegebenenfalls erforderlich, dass 1.) beiden Oberwerkzeugen 32, 33 die entsprechenden Prozessmittel bereitgestellt werden, und 2.) dass bei Bearbeitung des Werkstücks 1 eine geeignete Kraftübertragung zwischen dem Obertisch 30 und den Oberwerkzeugen 32, 33 erfolgen kann (um dann in Zusammenwirkung mit dem Unterwerkzeug eine geeignete Kraft auf das Werkstück auszuüben). Der zweite Punkt hat selbstredend zu erfolgen, ohne den bereits aufgenommenen ersten Obertisch 32 zu beeinträchtigen oder zu beschädigen.

Dazu kann der Obertisch 30 Verbindungseinrichtungen 34 aufweisen, um mit entsprechenden Verriegelungen 36 des ersten Oberwerkzeugs 32 in Eingriff kommen zu können. Entsprechend kann der Obertisch 30 über Verbindungseinrichtungen 35 verfügen, die mit entsprechenden Verriegelungen 36 des zweiten Oberwerkzeugs 33 in Eingriff kommen können. Die Verbindungseinrichtungen 35 sind dabei bevorzugt auf Abstützungen 101 vorgesehen, die sich vom Obertisch an dem aufgenommenen ersten Oberwerkzeug 32 vorbei nach unten d.h. in der Zusammenfahrrichtung erstrecken. Im Gegenzug verfügen die zweiten Oberwerkzeuge 33 dann bevorzugt über entsprechende Aufnahmen 102, die sich von dem zweiten Oberwerkzeug 33 nach oben erstrecken, und die entsprechenden Verriegelungen 36 aufweisen. Wenn das zweite Oberwerkzeug 33 in dem Obertisch 30 aufgenommen ist, sitzen die Aufnahmen 102 auf den Abstützungen 101, und die Verriegelungen 36 des zweiten Obertisches 33 sind mit den Verbindungseinrichtungen 35 in Eingriff (Fig. 2). Die Abstützung 101 und Aufnahmen 102 verlaufen dabei an dem ersten Oberwerkzeug 32 vorbei. Bevorzugt sind die Abstützungen 101 und die Aufnahmen 102 so dimensioniert, dass die Bearbeitungsoberfläche des ersten Oberwerkzeugs 32 von der Oberseite des zweiten Oberwerkzeugs distanziert ist. Die Anzahl der Abstützungen 101 und der entsprechenden Aufnahmen 102 kann dabei beliebig variiert und angepasst werden. Gemäß der hier dargestellten bevorzugten Ausführungsform verfügt der Obertisch 30 über sechs Abstützungen 101 und entsprechend verfügt das zweite Oberwerkzeug über sechs Aufnahmen 102.

Ferner kann der Obertisch 30 über Anschlüsse 37 verfügen, um das erste Oberwerkzeug 32 mit Energie und/oder anderen Prozessmitteln, wie etwa Prozesswasser oder Pneumatik zu versorgen. Die Anschlüsse 37 kommen dabei mit entsprechenden Andockungen 103 an der Oberseite des ersten Oberwerkzeugs 32 in Eingriff. Die Anschlüsse 38, um das zweite Oberwerkzeug 33 mit Energie und/oder Prozessmedien zu versorgen, befinden sich bevorzugt ebenfalls in den Abstützungen 101. Entsprechend sind die Andockungen 103, über die das zweite Oberwerkzeug 33 mit den Anschlüssen 38 verbunden wird, in den Aufnahmen 102 vorgesehen.

Ferner können sowohl das erste Oberwerkzeug 32, als auch das zweite Oberwerkzeug 33 über Zentriereinrichtungen 70 verfügen. Diese sind jeweils so eingerichtet, dass sie das jeweilige Oberwerkzeug 32, 33 beim Zusammenfahren von Obertisch 30 und Untertisch 20 bezüglich des Unterwerkzeugs 21 zentrieren. Ferner können sie der Ablage der Oberwerkzeuge 32, 33 auf der Ablage 40 dienen. Der Zentriereinrichtung 70 des ersten Oberwerkzeugs 32 kann ferner noch die Aufgabe zukommen, das erste Oberwerkzeug 32 bei Aufnahme des zweiten Oberwerkzeugs 33 bezüglich des zweiten Oberwerkzeugs 33 zu zentrieren. Dazu verfügt das zweite Oberwerkzeug über entsprechende Zentrieraufnahmen 71. Mithin kann der Obertisch 30 noch eine Vorsaugglocke 39 aufweisen.

Zur Bearbeitung des Werkstücks 1 durch die Oberwerkzeuge 32, 33 muss eine Kraft vom Obertisch 30 über die Oberwerkzeuge 32, 33 auf das Werkstück übertragen werden. Bezüglich des zweiten Oberwerkzeugs 33 kann dies direkt (über die Abstützungen 101 bzw. Aufnahmen 102), oder indirekt (über das erste Oberwerkzeug 32) erfolgen. Im letztgenannten Fall können etwaige Kräfte beispielsweise über die Zentriereinrichtungen 70 des ersten Oberwerkzeugs und die entsprechenden Zentriergegenstücke 71 des zweiten Oberwerkzeugs 33 übertragen werden.

Es sind allerdings ausdrücklich auch Ausgestaltungen denkbar, bei denen die Kraftübertragung ausschließlich direkt (d.h. vom Obertisch 30 direkt auf das zweite Oberwerkzeug 33), ausschließlich indirekt (d. h. vom Obertisch 30 über das erste Oberwerkzeug 32 auf das zweite Oberwerkzeug 33) oder teils direkt, teils indirekt erfolgt.

In der hier beschriebenen Ausführungsform wird das zweite Oberwerkzeug 33 über Abstützungen 101 bzw. Aufnahmen 102 im Obertisch 30 aufgenommen und die Kraftübertragung erfolgt über eben diese Elemente und/oder die Zentriereinrichtungen 70. Allerdings ist die Aufnahme für die entsprechenden Oberwerkzeuge im Obertisch 30 nicht auf diese beispielhafte Ausführungsform beschränkt und die Aufnahme kann beispielsweise auch durch Magnethalterungen oder integrierte Kopplungselemente im ersten Oberwerkzeug 32 erfolgen. Entsprechendes gilt analog für das erste Oberwerkzeug 32. Ebenso ist denkbar, die Anschlüsse 38 und die entsprechenden Andockungen 103 durch separate Anschlussleitungen zu ersetzen, wodurch auf Abstützungen 101 und Aufnahmen 102 gänzlich verzichtet werden kann. Als weitere Befestigungsmöglichkeiten der Oberwerkzeuge am Obertisch können auch verschiedenste Arten von Spann bzw. Halteeinrichtungen verwendet werden, wie z.B. pneumatische oder hydraulische Haltemöglichkeiten verwendet werden.

Durch die oben beschriebene Ausgestaltung des Obertisches 30, des ersten Oberwerkzeugs 32, und des zweiten Oberwerkzeugs 33 ist es möglich, ein zweites Oberwerkzeug 33 nicht nur zusätzlich zu einem ersten Oberwerkzeug 32 in dem Obertisch 30 aufzunehmen, sondern mit diesem auch einen Bearbeitungsvorgang am Werkstück 1 durchzuführen. Dies erlaubt es, mit einem Obertisch zwei (möglicherweise verschiedene) Bearbeitungsvorgänge an einem Werkstück ohne vollständigen Austausch der Oberwerkzeuge auszuführen. Gegenüber herkömmlichen Formungsvorrichtungen, bei denen die Bearbeitung eines Werkstücks in einem Formungsprozess durch zwei separate Obertische ausgeführt wird, hat dies den Vorteil, dass gemäß der bevorzugten Ausführungsform der vorliegenden Erfindung ein Obertisch eingespart werden kann. Da auch bei Verwendung zweier Obertische der jeweilige Obertisch zunächst über das zu bearbeitende Werkstück gefahren werden muss, führt die Aufnahme des zweiten Oberwerkzeugs 33, die gemäß der bevorzugten Ausführungsform notwendig wird, nicht zu einer deutlichen Verschlechterung der Prozesszeiten.

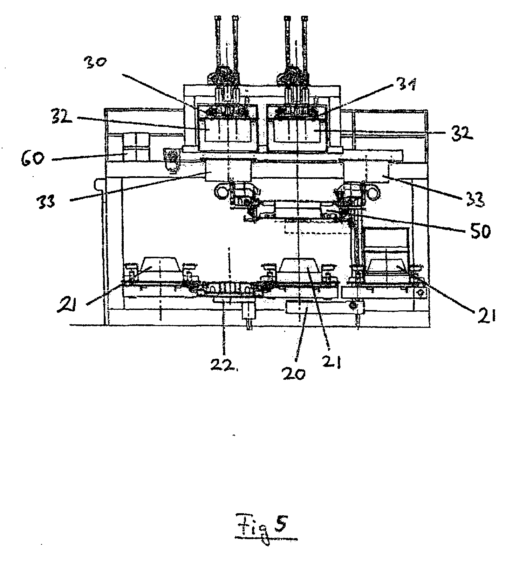

Darüber hinaus ist die vorliegende Erfindung ausdrücklich nicht auf die Bereitstellung nur eines Obertisches begrenzt. So zeigt Fig. 5 die Gesamtansicht einer Formungsvorrichtung gemäß einer weiteren bevorzugten Ausführungsform der vorliegenden Erfindung, bei der zwei Obertische 30, 31 vorgesehen sind. Die Ausgestaltung der Obertische 30, 31 entspricht dabei der bevorzugten Ausführungsform, und auch die anderen Komponenten können der bevorzugten Ausführungsform entnommen werden. Werden zwei Obertische 30, 31 bereitgestellt, die jeweils zwei Oberwerkzeuge 32, 33 nicht nur aufnehmen sondern mit diesen auch Bearbeitungsvorgänge durchführen können, können gegenüber herkömmlichen Anordnungen zwei Obertische eingespart werden.

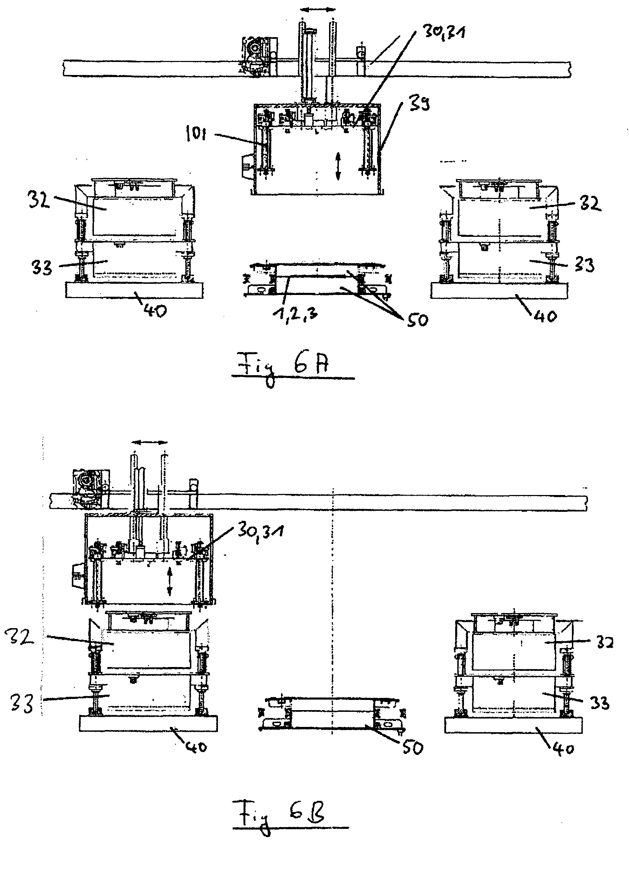

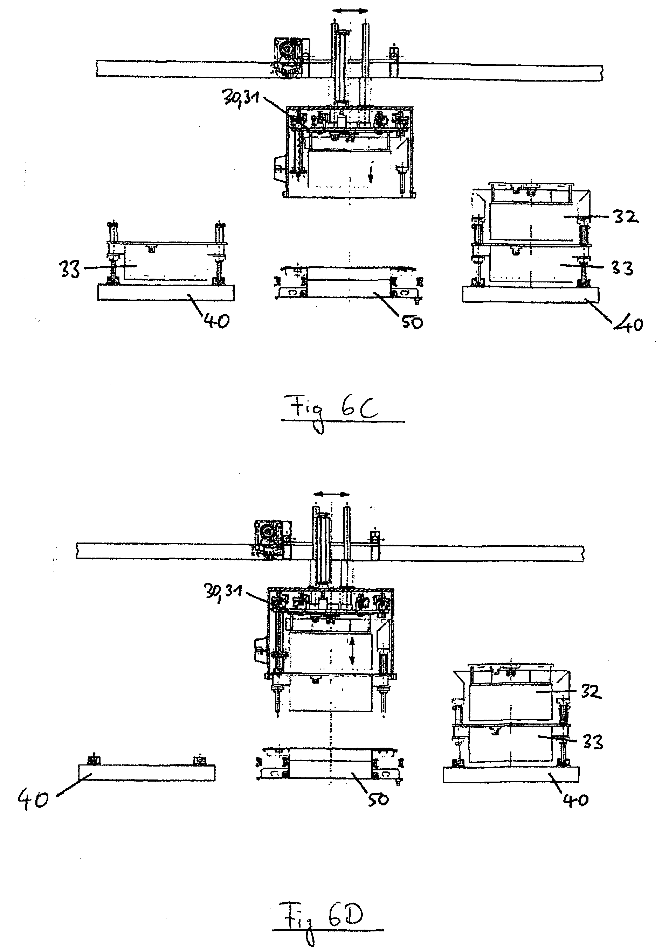

Vorrangiger Verwendungszweck der vorliegenden Erfindung sind dabei alle Arten von Thermoformprozessen. Ein solcher ist im Ablauf in Figuren 6A - 6D gezeigt. In Figur 6A befindet sich das Werkstück 1 in einer Positionierungseinrichtung 50. Das Werkstück 1 ist dabei bevorzugt eine thermoplastische Kunststoffplatte oder eine thermoplastische Kunststofffolie. Wird eine thermoplastische Kunststofffolie verwendet, kann die Positionierungseinrichtung 50 als Spannrahmen ausgebildet sein, der die Folie zwischen dem Unterwerkzeug 21 und den Oberwerkzeugen 32, 33 aufspannt. Über Erwärmungseinrichtungen 60 kann das Werkstück 1 erwärmt werden.

In Fig. 6A ist zunächst kein Oberwerkzeug 32, 33 im Obertisch 30 aufgenommen. Zur Aufnahme des ersten Oberwerkzeugs 32 fährt der Obertisch 30 über die Ablage 40 und nimmt das entsprechende erste Oberwerkzeug 32 auf. Dieses ist für den Thermoformprozess als Formwerkzeug oder IMG-Formwerkzeug ausgebildet.

Bei Aufnahme des ersten Oberwerkzeugs 32 durch den Obertisch 30 kommen die Verriegelungen 36 des ersten Oberwerkzeugs 32 mit den Verbindungseinrichtungen 34 des Obertisches 30 in Eingriff. Ferner werden die Anschlüsse 37 des Obertisches mit den entsprechenden Andockungen 103 des Oberwerkzeugs 32 verbunden. Dadurch wird das erste Oberwerkzeug 32 mit Prozessmitteln versorgt, wodurch es z. B. möglich ist das erste Oberwerkzeug 32 entsprechend zu temperieren. Hernach wird der Obertisch 30 mit aufgenommenen ersten Oberwerkzeug 32 über den Untertisch 20 und das Unterwerkzeug 21 gefahren. Durch Zustellen von Obertisch 30 und Untertisch 20 kommt das positionierte Werkstück 1 mit dem Oberwerkzeug 32 und dem Unterwerkzeug 21 in Kontakt. Dabei können die Zentriereinrichtungen 70 des ersten Oberwerkzeugs 32 das erste Oberwerkzeug 32 gegebenenfalls bezüglich des Unterwerkzeugs 21 zentrieren. Durch Kraftausübung des Obertisches 30 bezüglich des Untertisches 20 wird das Werkstück 1 geeignet umgeformt.

Anschließend werden Obertisch und Untertisch auseinandergefahren und der Obertisch wird über eine Ablage 40 bewegt, um ein zweites Oberwerkzeug 33 zusätzlich zum ersten Oberwerkzeug 32 aufzunehmen. Im Falle eines Thermoformverfahrens, ist dieses zweite Oberwerkzeug 33 als Stanzwerkzeug ausgebildet. Wird das zweite Oberwerkzeug 33 im Obertisch 30 aufgenommen, kommen die in den Abstützungen 101 und Aufnahmen 102 vorgesehenen Verbindungseinrichtungen 35 und Verriegelungen 36 miteinander in Eingriff. Zusätzlich werden die Anschlüsse 38 mit den Andockungen 103 des zweiten Oberwerkzeugs 33 verbunden. Weiterhin werden die Zentriereinrichtungen 70 des ersten Oberwerkzeugs in den Zentriergegenstücken 71 des zweiten Oberwerkzeugs aufgenommen. Insgesamt ist es dadurch möglich, das zweite Oberwerkzeug mit Prozessmedien zu versorgen, und eine Kraft geeignet auf das zweite Oberwerkzeug 33 zu übertragen.

Anschließend wird der Obertisch 30 mit dem Untertisch 20 zusammengefahren, und das Werkstück 1 wird geeignet ausgeschnitten (Fig. 6D). Hernach kann das zweite Oberwerkzeug 33 wieder abgelegt werden, und ein neuer Formvorgang kann durch das noch im Obertisch 30 verbleibende erste Oberwerkzeug ausgeführt werden.

Alternativ können auch das erste Oberwerkzeug als Stanzwerkzeug und das zweite Oberwerkzeug als Formwerkzeug ausgebildet sein.

Die Formungsvorrichtung gemäß der bevorzugten und der weiteren bevorzugten Ausführungsform eignet sich ferner auch für das Kaschieren eines Werkstücks 1, bei dem ein Obermaterial 3 auf ein Trägermaterial 2 aufzubringen ist, um das fertige Werkstück 1 zu erhalten. Der Ablauf ist dabei grundsätzlich ähnlich zum oben beschriebenen Thermoformverfahren. Das Obermaterial 3 wird zusammen mit dem Trägermaterial 2 zwischen dem Obertisch 30 und dem Untertisch 20 positioniert. Dabei wird das Obermaterial 3 bevorzugt durch einen Spannrahmen 50 gehalten. Beim Zusammenfahren des Obertisches 30 mit dem darin aufgenommenem ersten Oberwerkzeug 32 kommt das Werkstück mit dem ersten Oberwerkzeug 32 und dem Unterwerkzeug 21 in Kontakt, und das Obermaterial 3 wird auf das Trägermaterial 2 gepresst. Dabei wird das Obermaterial 3 durch Zusammenpressen und Verformen mit dem Trägermaterial 2 verbunden. Zusätzlich kann ein Klebstoff Verwendung finden. Auch in diesem Fall kann das Werkstück 1 erwärmt werden und die Oberwerkzeuge können entsprechend temperiert sein. Anschließend erfolgt ein Zuschnitt des Werkstücks 1 unter Verwendung des Stanzwerkzeugs als zweites Oberwerkzeug 33.

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Thermoformvorrichtung (10) zur Bearbeitung eines Werkstücks (1), umfassend:
- einen Untertisch (20) mit mindestens einem Unterwerkzeug (21);
- mindestens einen Obertisch (30, 31),
- mindestens ein Oberwerkzeug (32), das in dem mindestens einen Obertisch (30, 31) als erstes Oberwerkzeug (32) aufgenommen werden kann, wobei
- der mindestens eine Obertisch (30, 31) und/oder der Untertisch (20) in Bezug zueinander verfahrbar sind und zur Bearbeitung mindestens eines Werkstücks (1) derart zusammengefahren werden können, dass ein Bearbeitungsvorgang an dem mindestens einen Werkstück (1) durchgeführt werden kann, bei dem das mindestens eine Werkstück (1) mit dem Unterwerkzeug (21) und dem ersten Oberwerkzeug (33) in Kontakt kommt; und
- der mindestens eine Obertisch (30) geeignet ist, zusätzlich zu dem ersten Oberwerkzeug (32) ein zweites Oberwerkzeug (33) derart lösbar aufzunehmen, dass diese in der Zusammenfahrrichtung hintereinander angeordnet sind,
wobei der mindestens eine Obertisch (30) und die ersten und zweiten Oberwerkzeuge (32, 33) derart angepasst sind, dass bei aufgenommenem zweiten Oberwerkzeug (33) ein Bearbeitungsvorgang an dem mindestens einen Werkstück (1) durchgeführt werden kann, bei dem das mindestens eine Werkstück (1) mit dem Unterwerkzeug (21) und dem zweiten Oberwerkzeug (33) in Kontakt kommt,
wobei das erste Oberwerkzeug (32) oder das zweite Oberwerkzeug (33) ein Formwerkzeug (32) zum Ausformen des mindestens einen Werkstücks (1) ist, und das Andere ein geeignetes Werkzeug zum Zurechtschneiden des mindestens einen Werkstücks, insbesondere ein Stanzwerkzeug, ist, **dadurch gekennzeichnet, dass** der Obertisch (30) oder die Obertische (30, 31) ferner aufweisen:
jeweils eine Verbindungseinrichtung (34, 35) für das erste Oberwerkzeug (32) und das zweite Oberwerkzeug (33), die bei Aufnahme des jeweiligen Oberwerkzeugs (32, 33) mit einer entsprechenden Verriegelung (36) des jeweiligen Oberwerkzeugs in Eingriff kommen.

2. Thermoformvorrichtung nach Anspruch 1, wobei
das Zusammenfahren von Obertisch (30) und Untertisch (20) in vertikaler Richtung erfolgt, und
das erste Oberwerkzeug (32) und das zweite Oberwerkzeug (33) in dem Obertisch (30) oder den Obertischen (30, 31) übereinander aufgenommen sind.

3. Thermoformvorrichtung nach einem der vorhergehenden Ansprüche, bei der die Oberwerkzeuge (32, 33) ferner eine Zentriereinrichtung (36) aufweisen, um das jeweilige Oberwerkzeug (32, 33) beim Zusammenfahren von Obertisch (30, 31) und Untertisch (20) bezüglich des Unterwerkzeugs (21) zu zentrieren.

4. Thermoformvorrichtung nach einem der vorhergehenden Ansprüche, bei welcher der Obertisch (30) oder die Obertische (30, 31) ferner aufweisen:
jeweils mindestens einen Anschluss (37) für das erste Oberwerkzeug (32) und mindestens einen Anschluss (38) für das zweite Oberwerkzeug (33), wobei die Anschlüsse (37, 38) derart eingerichtet sind, dass sie das jeweilige Oberwerkzeug mit Energie und/oder Prozessfluid versorgen.

5. Thermoformvorrichtung nach einem der vorhergehenden Ansprüche, die ferner eine Ablage (40) für nicht in dem mindestens einen Obertisch (30, 31) aufgenommene Oberwerkzeuge (32, 33) aufweist.

6. Thermoformvorrichtung nach einem der vorhergehenden Ansprüche, bei der die Oberwerkzeuge (32, 33) insbesondere Formwerkzeuge, Stanzwerkzeuge, Prägewerkzeuge, Querbeschneidewerkzeuge und Beschnitt- oder Laserbeschnittwerkzeuge sind.

7. Thermoformvorrichtung nach einem der vorhergehenden Ansprüche, bei der die Oberwerkzeuge (32, 33) und Unterwerkzeuge (21) temperierbar sind, und die Vorrichtung ferner über eine Erwärmungseinrichtung (60) zum Erwärmen des mindestens einen Werkstücks (1) verfügt.

8. Thermoformvorrichtung nach Anspruch 1, bei der das mindestens eine Werkstück (1) aus einem Trägermaterial (2) besteht, auf das durch das Zusammenfahren des Formwerkzeugs und des Unterwerkzeugs (21) ein dazwischen eingelegtes Obermaterial (3) aufzubringen ist.

9. Thermoformvorrichtung nach Anspruch 1, wobei das mindestens eine Werkstück (1) eine thermoplastische Folie oder Platte ist, die durch Zusammenfahren des Formwerkzeugs und des Unterwerkzeugs (21) ausgeformt wird.

10. Thermoformvorrichtung nach einem der vorhergehenden Ansprüche, die ferner eine Positionierungseinrichtung (50) zum Positionieren des zwischen den Oberwerkzeugen (33, 32) und dem Unterwerkzeug (21) eingelegten mindestens einen Werkstücks (1) oder Teilen (2, 3) des mindestens einen Werkstücks (1) aufweist.

11. Thermoformverfahren unter Verwendung der Vorrichtung nach einem der Ansprüche 1 bis 10, das die folgenden Schritte aufweist:
- Anordnen und Positionieren des mindestens einen Werkstücks (1) zwischen einem in einem Obertisch (30) aufgenommenen Formwerkzeug (32) und einem auf einem Untertisch (20) befindlichen Unterwerkzeug (21),
- Zusammenfahren des Obertisches (30) und des Untertisches (20), sodass das Formwerkzeug (32) und das Unterwerkzeug (21) mit dem mindestens einen Werkstück (1) derart in Kontakt kommen, dass das mindestens eine Werkstück ausgeformt wird,
- Auseinanderfahren des Obertisches (30) und des Untertisches (20) und Aufnahme eines zweiten Oberwerkzeugs (33) zum Zurechtschneiden des mindestens einen Werkstücks, insbesondere eines Stanzwerkzeugs, im Obertisch (30) zusätzlich zum Formwerkzeug (32) in Zusammenfahrrichtung hintereinander derart, dass bei Zusammenfahren des Obertischs (30) und des Untertischs (20) das mindestens eine Werkstück (1) mit dem zweiten Oberwerkzeug (33) in Kontakt kommt,
- Zusammenfahren des Obertisches (30) und des Untertisches (20), sodass das zweite Oberwerkzeug (33) mit dem Werkstück (1) derart in Kontakt kommt, dass das Werkstück (1) ausgeschnitten wird,
- Auseinanderfahren des Obertisches (30) und des Untertisches (20) und Ablegen des Stanzwerkzeugs (33).

12. Thermoformverfahren nach Anspruch 11 bei dem das mindestens eine Werkstück (1) eine thermoplastische Folie oder Platte ist.

13. Thermoformverfahren nach Anspruch 11 bei dem das mindestens eine Werkstück (1) aus einem Trägermaterial (2) bestehet auf das ein Obermaterial (3) aufzubringen ist, und das ferner die Schritte umfasst:
- Anordnen und Positionieren des Obermaterials (3) und des Trägermaterials (2) zwischen einem in einem Obertisch (30) aufgenommenen Formwerkzeug (32) und einem Unterwerkzeug (21) auf einem Untertisch (20),
- Zusammenfahren des Obertischs (30) und des Untertischs (20) sodass das Formwerkzeug (32) und das Unterwerkzeug (21) mit dem Werkstück (1) in Kontakt kommen, um das Obermaterial (3) und das Trägermaterial (2) durch Zusammenpressen und Verformen miteinander zu verbinden.

14. Thermoformverfahren nach einem der Ansprüche 11 bis 13, das ferner die Schritte umfasst:
- Temperieren des Formwerkzeugs (32),
- Erwärmen des mindestens einen Werkstücks (1).

## Claims

1. Thermoforming apparatus (10) for processing a workpiece (1), comprising:
- a lower table (20) having at least one lower tool (21);
- at least one upper table (30, 31),
- at least one upper tool (32) which can be held in the at least one upper table (30, 31) as a first upper tool (32), wherein
- the at least one upper table (30, 31) and/or the lower table (20) are movable in relation to each other and can be brought together for processing at least one workpiece (1) in such a way that a processing operation can be performed on the at least one workpiece (1), in which the at least one workpiece (1) comes into contact with the lower tool (21) and the first upper tool (33); and
- the at least one upper table (30) is adapted to releasably hold a second upper tool (33) in addition to the first upper tool (32) in such a way that they are arranged one behind the other in the direction of bringing them together, wherein the at least one upper table (30) and the first and second upper tools (32, 33) are adapted in such a way that, when the second upper tool (33) is held, a processing operation can be performed on the at least one workpiece (1), in which the at least one workpiece (1) comes into contact with the lower tool (21) and the second upper tool (33),
wherein the first upper tool (32) or the second upper tool (33) is a shaping tool (32) for shaping the at least one workpiece (1), and the other is a suitable tool for trimming the at least one workpiece to fit, in particular a punching tool,
**characterised in that** the upper table (30) or tables (30, 31) further have:
one connecting device (34, 35) for each of the first upper tool (32) and the second upper tool (33) which, when the respective upper tool (32, 33) is held, become engaged with a corresponding locking device (36) for the respective upper tool.

2. Thermoforming apparatus according to claim 1, wherein upper table (30) and lower table (20) are brought together in a vertical direction, and the first upper tool (32) and the second upper tool (33) are held one above the other in the upper table (30) or tables (30, 31).

3. Thermoforming apparatus according to either of the preceding claims, in which the upper tools (32, 33) further have a centring device (36) for centring the respective upper tool (32, 33) relative to the lower tool (21) when upper table (30, 31) and lower table (20) are brought together.

4. Thermoforming apparatus according to any of the preceding claims, in which the upper table (30) or tables (30, 31) further have: in each case at least one connection (37) for the first upper tool (32) and at least one connection (38) for the second upper tool (33), wherein the connections (37, 38) are designed to supply the respective upper tool with energy and/or process fluid.

5. Thermoforming apparatus according to any of the preceding claims, which further has a tray (40) for upper tools (32, 33) which are not being held in the at least one upper table (30, 31).

6. Thermoforming apparatus according to any of the preceding claims, in which the upper tools (32, 33) are in particular shaping tools, punching tools, embossing tools, transverse cropping tools and trimming or laser trimming tools.

7. Thermoforming apparatus according to any of the preceding claims, in which the upper tools (32, 33) and lower tools (21) can be temperature-controlled, and the apparatus further has a heating device (60) for heating the at least one workpiece (1).

8. Thermoforming apparatus according to claim 1, in which the at least one workpiece (1) consists of a substrate material (2) to which is to be applied, by bringing together the shaping tool and the lower tool (21), an upper material (3) laid in between.

9. Thermoforming apparatus according to claim 1, wherein the at least one workpiece (1) is a thermoplastic film or sheet which is shaped by bringing together the shaping tool and the lower tool (21).

10. Thermoforming apparatus according to any of the preceding claims, which further has a positioning device (50) for positioning the at least one workpiece (1), or parts (2, 3) of the at least one workpiece (1), laid between the upper tools (33, 32) and the lower tool (21).

11. Thermoforming method using the apparatus according to any of claims 1 to 10, which has the following steps:
- arranging and positioning the at least one workpiece (1) between a shaping tool (32) held in an upper table (30) and a lower tool (21) located on a lower table (20),
- bringing together the upper table (30) and the lower table (20) so that the shaping tool (32) and the lower tool (21) come into contact with the at least one workpiece (1) in such a way that the at least one workpiece is shaped,
- moving the upper table (30) and the lower table (20) apart, and holding a second upper tool (33) for trimming the at least one workpiece to fit, in particular a punching tool, in the upper table (30) in addition to the shaping tool (32) one behind the other in the direction of bringing them together, in such a way that, when the upper table (30) and the lower table (20) are brought together, the at least one workpiece (1) comes into contact with the second upper tool (33),
- bringing together the upper table (30) and the lower table (20), so that the second upper tool (33) comes into contact with the workpiece (1) in such a way that the workpiece (1) is cut out,
- moving the upper table (30) and the lower table (20) apart and depositing the punching tool (33).

12. Thermoforming method according to claim 11, in which the at least one workpiece (1) is a thermoplastic film or sheet.

13. Thermoforming method according to claim 11, in which the at least one workpiece (1) consists of a substrate material (2) to which an upper material (3) is to be applied, and which further comprises the steps of:
- arranging and positioning the upper material (3) and the substrate material (2) between a shaping tool (32) held in an upper table (30) and a lower tool (21) on a lower table (20),
- bringing together the upper table (30) and the lower table (20) so that the shaping tool (32) and the lower tool (21) come into contact with the workpiece (1) in order to join the upper material (3) and substrate material (2) together by compression and deformation.

14. Thermoforming method according to any of claims 11 to 13, which further comprises the steps of:
- controlling the temperature of the shaping tool (32),
- heating the at least one workpiece (1).

## Revendications

1. Dispositif de thermoformage (10) servant à usiner une pièce (1), comprenant :
- un plateau inférieur (20) comprenant au moins un outil inférieur (21) ;
- au moins un plateau supérieur (30, 31),
- au moins un outil supérieur (32), qui peut être logé dans le au moins un plateau supérieur (30, 31) en tant que premier outil supérieur (32), dans lequel :
- le au moins un plateau supérieur (30, 31) et/ou le plateau inférieur (20) peuvent être déplacés l'un par rapport à l'autre et peuvent être rapprochés aux fins de l'usinage d'au moins une pièce (1) de telle manière qu'une opération d'usinage puisse être effectuée sur la au moins une pièce (1), dans laquelle opération d'usinage la au moins une pièce (1) vient en contact avec l'outil inférieur (21) et le premier outil supérieur (33) ; et
- le au moins un plateau supérieur (30) étant adapté pour recevoir de manière amovible, en plus du premier outil supérieur (32) un second outil supérieur (33) de telle manière que ces derniers soient disposés l'un derrière l'autre dans le sens de rapprochement, dans lequel le au moins un plateau supérieur (30) et les premier et second outils supérieurs (32, 33) sont adaptés de telle manière que, lorsque le second outil supérieur (33) est reçu , une opération d'usinage puisse être effectuée sur la au moins une pièce (1), dans laquelle opération d'usinage la au moins une pièce (1) vient en contact avec l'outil inférieur (21) et le second outil supérieur (33), dans lequel :
le premier outil supérieur (32) ou le second outil supérieur (33) est un outil de formage (32) servant à démouler la au moins une pièce (1) et l'autre outil est un outil adapté servant à sectionner la au moins une pièce , en particulier un outil d'estampage,
**caractérisé en ce que** le plateau supérieur (30) ou les plateaux supérieurs (30, 31) présente(nt) en outre :
respectivement un système d'assemblage (34, 35) pour le premier outil supérieur (32) et le second outil supérieur (33), qui viennent en prise, lorsque l'outil supérieur (32, 33) respectif est reçu , avec un verrouillage correspondant (36) de l'outil supérieur respectif.

2. Dispositif de thermoformage selon la revendication 1, dans lequel :
le rapprochement du plateau supérieur (30) et du plateau inférieur (20) est effectué dans la direction verticale et
le premier outil supérieur (32) et le second outil supérieur (33) sont reçus l'un au-dessus de l'autre dans le plateau supérieur (30) ou les plateaux supérieurs (30, 31).

3. Dispositif de thermoformage selon l'une quelconque des revendications précédentes, dans lequel les outils supérieurs (32, 33) présentent en outre un système de centrage (36) afin de centrer, par rapport à l'outil inférieur (21), l'outil supérieur respectif (32, 33) lorsque le plateau supérieur (30, 31) et le plateau inférieur (20) sont rapprochés.

4. Dispositif de thermoformage selon l'une quelconque des revendications précédentes, dans lequel le plateau supérieur (30) ou les plateaux supérieurs (30, 31) présente(nt) en outre:
respectivement au moins un raccord (37) pour le premier outil supérieur (32) et au moins un raccord (38) pour le second outil supérieur (33), les raccords (37, 38) étant réglés de telle manière qu'ils alimentent l'outil supérieur respectif en énergie et/ou en fluide de traitement .

5. Dispositif de thermoformage selon l'une quelconque des revendications précédentes, qui présente en outre une étagère (40) pour des outils supérieurs (32, 33) non reçus dans le au moins un plateau supérieur (30, 31) .

6. Dispositif de thermoformage selon l'une quelconque des revendications précédentes, dans lequel les outils supérieurs (32, 33) sont en particulier des outils de formage, des outils d'estampage, des outils de matriçage, des outils de découpage transversal et des outils de rognage ou de rognage par laser.

7. Dispositif de thermoformage selon l'une quelconque des revendications précédentes, les outils supérieurs (32, 33) et les outils inférieurs (21) pouvant être thermorégulés et le dispositif dispose en outre d'un dispositif de chauffage (60) servant à chauffer la au moins une pièce (1) .

8. Dispositif de thermoformage selon la revendication 1, dans lequel la au moins une pièce (1) est constituée d'un matériau de support (2), sur lequel doit être appliqué, par le rapprochement de l'outil de formage et de l'outil inférieur (21), un matériau supérieur (3) inséré entre ces derniers.

9. Dispositif de thermoformage selon la revendication 1, dans lequel la au moins une pièce (1) est un film ou une plaque thermoplastique, qui est démoulé(e) par rapprochement de l'outil de formage et de l'outil inférieur (21).

10. Dispositif de thermoformage selon l'une quelconque des revendications précédentes, qui présente en outre un système de positionnement (50) servant à positionner la au moins une pièce (1) ou des parties (2, 3) de la au moins pièce (1) insérées entre les outils supérieurs (33, 32) et l'outil inférieur (21).

11. Procédé de thermoformage utilisant le dispositif selon l'une quelconque des revendications 1 à 10, lequel présente les étapes suivantes consistant à :
- disposer et positionner la au moins une pièce (1) entre un outil de formage (32) reçu dans un plateau supérieur (30) et un outil inférieur (21) se trouvant sur un plateau inférieur (20) ;
- rapprocher le plateau supérieur (30) et le plateau inférieur (20) de sorte que l'outil de formage (32) et l'outil inférieur (21) viennent en contact avec la au moins une pièce (1) de telle manière que la au moins une pièce soit démoulée ;
- écarter le plateau supérieur (30) et le plateau inférieur (20) et à recevoir un second outil supérieur (33) servant à sectionner la au moins une pièce , en particulier un outil d'estampage, dans le plateau supérieur (30) en plus de l'outil de formage (32) dans le sens de rapprochement l'un derrière l'autre de telle manière que, lorsque le plateau supérieur (30) et le plateau inférieur (20) sont rapprochés, la au moins une pièce (1) vienne en contact avec le second outil supérieur (33) ;
- rapprocher le plateau supérieur (30) et le plateau inférieur (20) de sorte que le second outil supérieur (33) vienne en contact avec la pièce (1) de telle manière que la pièce (1) soit découpée ;
- écarter le plateau supérieur (30) et le plateau inférieur (20) et déposer l'outil d'estampage (33).

12. Procédé de thermoformage selon la revendication 11, dans lequel la au moins une pièce (1) est un film ou une plaque thermoplastique.

13. Procédé de thermoformage selon la revendication 11, dans lequel la au moins une pièce (1) est constituée d'un matériau de support (2), sur lequel un matériau supérieur (3) doit être appliqué, lequel procédé comprend en outre les étapes consistant à :
- disposer et positionner le matériau supérieur (3) et le matériau de support (2) entre un outil de formage (32) reçu dans un plateau supérieur (30) et un outil inférieur (21) sur un plateau inférieur (20) ;
- rapprocher le plateau supérieur (30) et le plateau inférieur (20) de sorte que l'outil de formage (32) et l'outil inférieur (21) viennent en contact avec la pièce (1) afin d'assembler entre eux le matériau supérieur (3) et le matériau de support (2) par compression et déformation.

14. Procédé de thermoformage selon l'une quelconque des revendications 11 à 13, qui comprend en outre les étapes consistant à :
- thermoréguler l'outil de formage (32) ;
- chauffer la au moins une pièce (1) .
